**Europäisches Patentamt**

**European Patent Office**

**Office européen des brevets**

(11) Veröffentlichungsnummer: **0 329 673 B1**

## (12) EUROPÄISCHE PATENTSCHRIFT

(45) Veröffentlichungstag der Patentschrift:
20.02.91 Patentblatt 91/08

(51) Int. Cl.⁵ : **C10J 3/54, C10J 3/56, C10J 3/66**

(21) Anmeldenummer: **87907103.3**

(22) Anmeldetag: **15.10.87**

(86) Internationale Anmeldenummer:
**PCT/EP87/00605**

(87) Internationale Veröffentlichungsnummer:
**WO 88/02769 21.04.88 Gazette 88/09**

## (54) VERFAHREN ZUR ALLOTHERMEN KOHLEVERGASUNG UND WIRBELBETT-GAS-GENERATOR ZUR DURCHFÜHRUNG DES VERFAHRENS.

(30) Priorität: 16.10.86 DE 3635215

(43) Veröffentlichungstag der Anmeldung:
30.08.89 Patentblatt 89/35

(45) Bekanntmachung des Hinweises auf die Patenterteilung:
20.02.91 Patentblatt 91/08

(84) Benannte Vertragsstaaten:
AT BE CH DE FR GB IT LI LU NL SE

(56) Entgegenhaltungen:
EP-A- 0 014 488
DE-A- 3 228 532
GB-A- 2 069 861

(73) Patentinhaber: Bergwerksverband GmbH
Franz-Fischer-Weg 61
D-4300 Essen 13 (DE)

(72) Erfinder: KUBIAK, Helmut
Zur Emschermulde 20
D-4690 Herne 2 (DE)
Erfinder: SCHRÖTER, Hans, Jürgen
Düsterweg 14a
D-4330 Mülheim (DE)
Erfinder: GAPPA, Günther
Weskampstr. 17
D-4660 Gelsenkirchen (DE)
Erfinder: KALWITZKI, Heinrich
Ernestinenstra e 220
D-4330 Essen 1 (DE)
Erfinder: KNOP, Klaus
Eckesdyck 11
D-4170 Geldern (DE)

## Beschreibung

Die Erfindung bezieht sich auf ein Verfahren zur Kohlevergasung unter Druck mit Wasserdampf in einem Gasgenerator mit innen angeordneten Wärmetauscherrohren für das Wärmeträgermedium, wobei das über die Wärmetauscherrohre in den Gasgenerator eintretende heiße Wärmeträgermedium zunächst einer Vergasungszone und anschließend einer Pyrolysezone zugeführt wird und die zu vergasende Kohle ein Wirbelbett bildet und im Gegenstrom zum Wärmeträgermedium durch den Gasgenerator gelangt, wobei der Vergasungsprozeß vollständig allotherm durchgeführt wird und Rohgasrückkreisgas als weiteres Vergasungs- und Fluidisierungsmittel sowie als weiteres Wärmeträgermedium in die Pyrolysezone eingespeist wird.

Ein solches Verfahren ist aus DE-A-32 28 532 bekannt. Bei der dort gewählten Verfahrensführung entstehen durch die Einspeisung der Kohle von oben Kondensationsprodukte, u. a. Teer, außerdem wird die Asche heiß ausgeschleust.

Die Erfindung betrifft weiterhin Wirbelbett-Gasgeneratoren zur Durchführung des Verfahrens. Ein Wirbelbett-Gasgenerator für die autotherme Kohlevergasung ist aus EP-A-00 14 488 bekannt, bei dem eine Verbrennungszone, eine Pyrolysezone und eine Vergasungszone vorgesehen sind, die jeweils über einen Gassammelraum verfügen, so daß eine Rückkreisung von Rohgas nicht erfolgen kann.

Die Vergasung von festen Brennstoffen erfolgt grundsätzlich bei erhöhten Temperaturen. Die zur Erhitzung und Umsetzung benötigte Wärme wird entweder durch teilweise Verbrennung (autotherme Verfahren) oder durch Zuführung von Fremdwärme (allotherme Verfahren) beigestellt. Die allotherme Vergasung bietet gegenüber der autothermen Vergasung den Vorteil, daß der Brennstoff im Vergasungsraum nicht zur Wärmedarbietung teilweise verbrannt werden muß. Bei der allothermen Vergasung kann die Wärme aus beliebigen fremden Quellen, so z. B. aus Hochtemperatur-Kernreaktoren, aber auch aus Brennkammern, in denen ein Teil des erzeugten Produktgases verbrannt wird, entnommen werden. Dieser Vorteil bietet sich sowohl bei der Vergasung der Kohle bis zu hohen Umsatzgraden als auch bei der Teilvergasung an, bei der neben Gas ein Feinkoks erzeugt werden soll - z. B. für einen Prozeß zur Roheisenerzeugung mit gekoppelter Gasproduktion.

Allotherme Wirbelbett-Gasgeneratoren liegender und stehender Bauweise sind ferner aus DE-PS 24 23 951.8, DE-PS 25 49 784.1, DE-PS 31 12 708.8 und DE-PS 30 42 142 bekannt. Bei diesen Erfindungen ist davon ausgegangen worden, daß in alle Bereiche des Gasgenerators der Wärmeträger mit der hohen Vorlauftemperatur parallel eingespeist wird, auch z. B. in den Bereich der Kohledosierung.

In diesem Bereich findet die Aufheizung der eingegebenen Kohle statt, wobei zunächst die in der Kohle enthaltenen flüchtigen Bestandteile ausgetrieben werden. Die einzelnen Kohlepartikel gehen dabei in ihrer Struktur und in ihrer chemischen Zusammensetzung in den Zustand von Kokspartikeln über. Während die ausgetriebenen flüchtigen Bestandteile, insbesondere die gebildeten Teere, sich in Sekundärreaktionen weiter umsetzen, beginnt der entstandene Koks zu vergasen. Den Vorgang der Flüchtigen-Entbindung und der Koksbildung, der dem eigentlichen Vergasungsprozeß voranschreitet, nennt man Pyrolyse. Im folgenden wird die entsprechende Zone des Gasgenerators, in dem im wesentlichen diese Pyrolyse abläuft, Pyrolysezone genannt.

Der Erfindung liegt die Aufgabe zugrunde, das Verfahren der eingangs genannten Gattung so weiterzuentwickeln, daß die Verfahrensführung verbessert und die eingespeiste Fremdwärme optimal genutzt wird sowie dafür geeignete Gasgeneratoren bereitzustellen.

Diese Aufgabe wird im Hinblick auf das Verfahren (Anspruch 1) dadurch gelöst, daß die Kohleaufgabe mittels überhitztem Wasserdampf von unten in das Wirbelbett der Pyrolysezone erfolgt und die Aschepartikel in einer separaten Kühlzone mittels trockenem Produktgas fluidisiert und gekühlt werden.

Durch die Kohleaufgabe mittels überhitztem Wasserdampf von unten in das Wirbelbett wird die Bildung von Teer und anderen kondensierbaren Bestandteilen vermieden, die in nachgeschalteten Anlagenteilen Schwierigkeiten bereiten würden. Die spezielle Aschekühlzone trägt zu einer optimalen Wärmenutzung bei. Weiterhin wird durch die wärmeträgerseitige Hintereinanderschaltung von Vergasungs- und Pyrolysezone die gesamte Energie bei hoher Temperatur - die die Kinetik, d. h. die Geschwindigkeit der Vergasung sehr begünstigt - in der Vergasungszone angeboten. Anschließend gelangt der gesamte Wärmeträger mit niedrigerer Eintrittstemperatur in die Pyrolysezone und steht dort zur Abdeckung des Wärmebedarfs für den Aufheiz- und Pyrolyseprozeß zur Verfügung. Die Führung des Wärmeträgers und des Vergasungsmittels im Gegenstrom hat eine deutlich bessere Wärmenutzung des Wärmeträgermediums zur Folge. Die abgesenkte Temperatur wirkt sich in kinetischer Hinsicht auf die Pyrolysereaktion nicht nachteilig aus, denn dort kommt es weniger auf eine hohe Temperatur, sondern auf die Bereitstellung genügend großer Wärmemengen an. Dieses wird über den hohen Massenstrom des Wärmeträgers und eine geeignete Dimensionierung der Wärmetauscher gewährleistet. Da der Wasserdampf außer als Vergasungsmittel und als Fluidisierungs-

2

mittel auch als weiterer Wärmeträgerlieferant für die Kohlevergasung dient, wird die Vergasungsleistung über die Temperaturanhebung erhöht.

Die Kohleaufgabe kann auch mittels rückgekreistem Rohgas (Anspruch 2) erfolgen, vorzugsweise mit etwa 700 bis 800° C ; um die bei der Pyrolyse entstehenden Teere zu gasförmigen Kohlenwasserstoffen zu cracken, so daß die Teerkondensationen in nachgeschalteten Apparaten vermieden werden.

Die Kohlenaufgabe erfolgt vorzugsweise im Pyrolysebereich und wird mittels einer oder mehrerer Strahlaufgabelanzen vorgenommen (Anspruch 3), um Agglomerationen der Kohlepartikel zu vermeiden. Solche Strahlaufgabelanzen sind beispielsweise aus der DE-OS 31 36 645 bekannt.

Die Fluidisierung und Kühlung der Aschepartikel kann in der separaten Kühlzone mittels Wasserdampf erfolgen, dessen Temperatur vorzugsweise 20 bis 100°C oberhalb des druckabhängigen Taupunktes liegt (Anspruch 4), um die Wärme der Aschepartikel auf hohem Temperaturniveau zu nutzen.

Die Ausdosierung der gekühlten Asche aus der Kühlzone wird zweckmäßig über eine Austragsschleuse vorgenommen (Anspruch 5). Eine solche Austragsschleuse für heißes Material ist beispielsweise aus der DE-PS 33 39 061 bekannt.

Es empfiehlt sich, als Wärmeträgergas Rauchgas zu verwenden, vorzugsweise mit einer Temperatur von etwa 950°C (Anspruch 6), das über seine hohe Dichte große Wärmemengen transportiert und in Nachfolgeprozessen aus den Produkten dieses Prozesses erzeugt werden kann.

Als Wärmeträgergas kann Helium Verwendung finden, das aus dem Sekundärkreislauf mit etwa 900°C oder aus dem Primärkreislauf mit bis zu 950°C eines Hochtemperaturreaktors entnommen werden kann (Anspruch 7) und über sehr gute Wärmeübertragungseigenschaften verfügt.

Zur Durchführung des Verfahrens sind folgende Wirbelbett-Gasgeneratoren geeignet :

Eine erste Wirbelbett-Gasgeneratorausführung zur Durchführung des Verfahrens kennzeichnet sich dadurch, daß ein zylindrischer Druckbehälter eines liegend angeordneten Gasgenerators im Bereich der Wirbelschicht in eine Aufheiz- und Pyrolysezone, eine separate Vergasungszone sowie eine separate Kühlzone unterteilt ist, die Aufheiz- und Pyrolysezone mit als Strahlaufgabe ausgebildeten Kohleeinfüllöffnungen mit einer Rohgasrückkreisegaszuführung bzw. einer Dampfzuführung versehen ist, die Vergasungszone Dampfzuführungen aufweist, die mit Anströmböden verbunden sind, und der Kühlzone eine Dampfzuführung mit Anströmboden und eine Austragsschleuse zugeordnet sind, in der Vergasungszone eine Wärmeträgergaszuführung und Wärmetauscherrohre sowie eine innen oder außen verlegte Verbindungsleitung angeordnet sind und letzte mit einem Wärmetauscherrohr und einer Wärmeträgergasabführung in der Aufheiz- und Pyrolysezone verbunden ist, zwischen Vergasungszone und Aufheiz- und Pyrolysezone im Bereich der Wirbelschicht ein gas- und feststoffundurchlässiges Wehr und zwischen Vergasungszone und Kühlzone im Bereich der Wirbelschicht ein gas- und feststoffundurchlässiges Wehr vorgesehen sind und sich oberhalb der Zonen ein gemeinsamer Gassammelraum mit Gasabführung befindet (Anspruch 8).

Bei der liegenden Gasgeneratorausführung wird eine erhebliche Wasserdampfeinsparung dadurch erzielt, daß der in die Vergasungszone eingespeiste Wasserdampf nach seiner Teilumsetzung in dieser Zone mit dem Rohgas aus der Aufheiz- und Pyrolysezone zusammengeführt wird und teilweise nach rekuparativem Wärmetausch in den Pyrolysebereich strömt, so daß bei diesem Gasgenerator kein zusätzlicher Wasserdampfbedarf in der Pyrolysezone besteht. Ebenso wie bei der nachfolgend beschriebenen stehenden Gasgeneratorausführung kann im Vergasungsbereich der Wasserdampfgehalt sehr hoch gehalten werden, was wiederum die Kinetik begünstigt. Der nicht umgesetzte Wasserdampf reicht vollkommen aus, um nach teilweiser Rückkreisung als feuchtes Rohgas den Bedarf für die sekundären Pyrolysereaktionen in der Aufheiz- und Pyrolysezone abzudecken.

Die liegende Anordnung des Gasgenerators mit feststoffundurchlässigem Wehr führt gegenüber der nachfolgend beschriebenen stehenden Ausführung zu einem zusätzlichen Vorteil, da hier nicht nur eine Aufteilung in zwei Stufen, sondern eine zusätzliche Kaskadierung in der Vergasungszone ermöglicht wird. Das sogenannte Backmixing wird noch stärker unterdrückt.

Beim liegend angeordneten Wirbelbett-Gasgenerator kann es sich empfehlen, daß in der Aufheiz- und Pyrolysezone eine zusätzliche Rohgasrückkreisgaszuführung und ein Anströmboden vorgesehen sind, und in die Gasrückführung Wärmetauscher und eine Gaspumpe einbezogen sind (Anspruch 9).

Eine zweite Ausgestaltung eines Wirbelbett-Gasgenerators zur Durchführung des Verfahrens kennzeichnet sich dadurch, daß ein zylindrischer Druckbehälter eines stehend angeordneten Gasgenerators in eine in seinem oberen Bereich befindliche Aufheiz- und Pyrolysezone, eine darunter angeordnete, separate Vergasungszone sowie eine darunter angeordnete, separate Kühlzone unterteilt ist, die Aufheiz- und Pyrolysezone mit als Strahlaufgabe ausgebildeten Kohleeinfüllöffnungen mit einer Rohgasrückkreisegaszuführung bzw. einer Dampfzuführung versehen ist, die Vergasungszone eine Dampfzuführung aufweist, die mit einem Anströmboden verbunden ist, und der Kühlzone eine Dampfzuführung mit Anströmboden und eine Austragsschleuse zugeordnet sind, in der Aufheiz- und Pyrolysezone eine Wärmeträgergasabführung und Wärmetauscherrohre und eine Verbindungsleitung angeordnet sind und letztere mit einem Wärmetauscherrohr und einer Wärmeträgergaszuführung in der Vergasungszone verbunden ist, zwischen Vergasungszone und Aufheiz- und Pyrolysezone ein gas- und feststoffdurchlässiges Wehr vorgesehen ist und sich oberhalb der Aufheiz- und Pyrolysezone ein Gassammelraum mit Gasabführung befindet (Anspruch 10).

Bei der stehenden Gasgeneratorausführung ist vorteilhaft, daß erhebliche Wasserdampfmengen eingespart werden, weil der in die Vergasungszone eingespeiste Wasserdampf nach seiner Teilumsetzung in dieser Zone mit dem produzierten Gas direkt in den Pyrolysebereich strömt, so daß praktisch kein zusätzlicher Wasserdampfbedarf in dieser Zone besteht.

Gleichzeitig ergibt sich hieraus ein weiterer Vorteil, daß nämlich im Vergasungsbereich der Wasserdampfgehalt sehr hoch gehalten werden kann, was ebenfalls die Kinetik begünstigt. Der im Vergasungsbereich nicht umgesetzte Wasserdampf reicht vollkommen aus, um den Bedarf für die Teerumsetzung im Pyrolysebereich abzudecken.

Ein weiterer Vorteil der stehenden Gasgeneratorausführung liegt darin, daß die übereinander-Anordnung von Pyrolyse- und Vergasungsbereich eine Trennung der beiden Zonen über ein gas- und feststoffdurchlässiges Wehr ermöglicht. Die hierdurch erreichte Aufteilung in zwei Stufen (Kaskadierung) verringert deutlich die unerwünschte Vermischung von frisch eingespeistem Brennstoff mit Brennstoff aus dem Vergasungsbereich (sog. Backmixing), so daß auch eine Vergasung mit hohen Umsatzgraden möglich ist.

Weitere Vorteile gegenüber anderen Verfahren ergeben sich sowohl für die liegende als auch die stehende Gasgeneratorausführung durch die Kühlung des Restkokses in der Kühlzone.

In der liegenden Ausführung wird der Restkoks nach seinem übertreten von der Vergasungs- in die Kühlzone durch Produktgas oder Dampf niedriger Temperatur gekühlt. In der stehenden Ausführung erfolgt diese Kühlung allerdings vorzugsweise mit Dampf, der eine Temperatur von 20 - 100°C oberhalb des Taupunktes aufweist, um eine Reaktionshemmung durch Produktgas in der darüberliegenden Vergasungzone zu vermeiden. Es wird dadurch zum einen erreicht, daß der Restkoks bis zu einer Temperatur abgekühlt wird, bei der eine verfahrenstechnisch einfachere Ausdosierung möglich ist. Zum anderen ergibt sich ein noch größerer Vorteil daraus, daß - besonders im Teilvergasungsfall - eine effektive Nutzung der fühlbaren Wärme des erzeugten Feinkokses ermöglicht wird.

Die Erfindung wird nachstehend anhand der Zeichnung näher erläutert. Es zeigen

Fig. 1 das Prinzip der Erfindung, dargestellt an einem stehend angeordneten Gasgenerator ;

Fig. 2 das Prinzip der Erfindung, dargestellt an einem liegend angeordneten Gasgenerator.

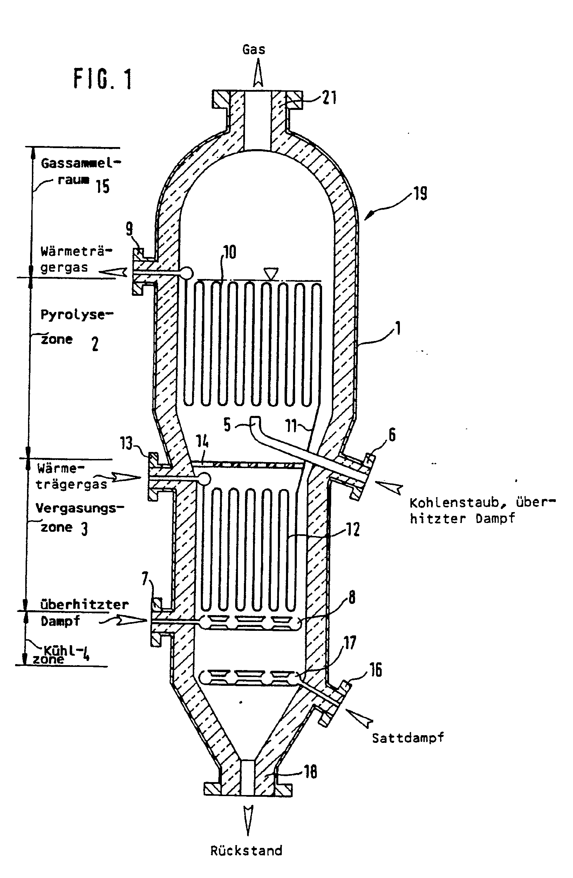

Fig. 1 zeigt einen Druckbehälter 1, der in vier Zonen eingeteilt ist, die beim stehend ausgebildeten Gasgenerator 19 übereinander angeordnet sind. Die oberste Zone ist ein Gassammelraum 15, aus dem das Gas über einen Stutzen 21 abgezogen werden kann. In die nächste Zone, Aufheiz- und Pyrolysezone 2, wird über einen Anschlußstutzen 6 feiner Kohlenstaub als Vergasungsmaterial mit einer Temperatur unterhalb des Erweichungspunktes und Dampf als Vergasungsmittel mit einer Temperatur von rd. 700 bis 800° C mittels einer Strahlaufgabe 5 pneumatisch eindosiert. Einzelheiten dieser Aufgabevorrichtung sind in DE-OS 31 36 645 beschrieben. Im zylinderischen Teil der Zone 2 befindet sich ein Anschlußstutzen 9 für das Ableiten des Wärmeträgergases, der mit Wärmeträgerrohren 10 verbunden ist. Der Durchmesser der Pyrolysezone 2 ist der Gasgeschwindigkeit angepaßt, die sich nach der Gasaustrittsmenge der darunterliegenden Vergasungszone und den Strahlaufgabegasmengen bemißt. Das Wärmeträgermedium wird im Gegenstrom zum Vergasungsbrennstoff aus einer Vergasungszone 3 auf tieferem Temperaturniveau in die Pyrolysezone 2 geleitet.

Die Vergasungszone 3 ist im mittleren Teil des Druckbehälters angeordnet. Sie ist unten mit einem Anschlußstutzen 7 für die Zuleitung von überhitztem Wasserdampf und oben mit einem Anschlußstutzen 13 für die Zuführung des heißen Wärmeträgermediums versehen. Dieses gelangt mit hoher Temperatur (etwa 900°C bis 950°C) in Wärmetauscherrohre 12 und überträgt seine fühlbare Wärme auf den Vergasungsbrennstoff zur Umwandlung in Gas. über eine Leitung 11 gelangt das abgekühlte Wärmeträgergas in die Wärmetauscherrohre 10 in der Aufheiz- und Pyrolysezone 2 und über den Stutzen 9 mit etwa 750°C bis 800°C wieder aus dem Druckbehälter 1 heraus. Der überhitzte Wasserdampf mit etwa 700°C bis 800°C wird dem Wirbelbett in Zone 3 über einen Anströmboden 8 zugeführt. Gemäß einer hier nicht abgebildeten konstruktiven Variante können die Anschlußstutzen 9 und 13 für den Aus- bzw. Eintritt des Wärmeträgergases auch nebeneinander im bereich des Gesamtaustrittstutzens angeordnet werden.

Vergasungs- und Pyrolysezone 3 bzw. 2 sind zur Verbesserung der Verweilzeit des Vergasungsmittels (Absenkung des Backmixings) durch ein gas- und feststoffdurchlässiges Wehr 14 voneinander abgeteilt. Das Wehr 14 ist so konzipiert, daß in seinem äußeren wandnahen Bereich bevorzugt der Kohlenstaub aus der Pyrolysezone 2 in die Vergasungszone 3 fließt, was der Feststoffbewegung entgegenkommt, die sich in einem Wirbelbett ausbildet.

4

Unterhalb der Vergasungszone 3 schließt sich, noch im zylindrischen Teil des Druckbehälters 1, eine Kühlzone 4 für den Brennstoffrückstand an. Die Kühlzone 4 wird über einen Anschlußstutzen 16 und einen Anströmboden 17 mit Wasserdampf beschickt, dessen Temperatur 20 bis 100°C oberhalb des Taupunktes liegt. Die Kühlzone 4 wird bevorzugt als Wanderschicht betrieben, der Rückstand kann aber auch durch Erhöhung der Anströmdampfmenge fluidisiert werden. Unterhalb des Anströmbodens 17 verjüngt sich der Druckbehälter konisch bis zum Anschlußstutzen 18 für den Austrag des gekühlten Rückstandes, der über eine hier nicht abgebildete Schleuse gemäß DE-PS 33 39 061 erfolgen kann.

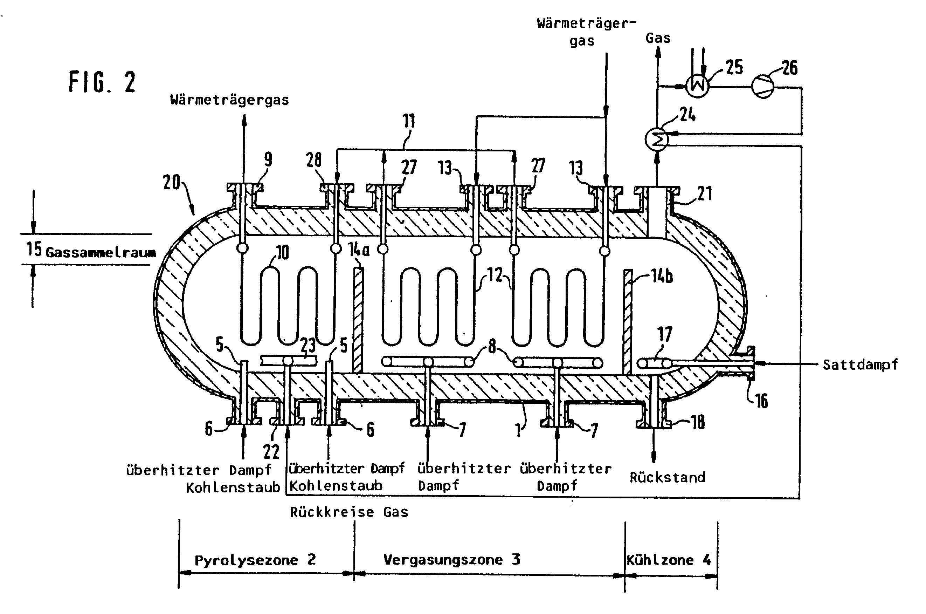

In Fig. 2 ist ein liegend angeordneter Gasgenerator 20 dargestellt. Der Druckbehälter 1 ist ebenfalls in vier Zonen eingeteilt, von denen hier drei hintereinander angeordnet sind. In der vordersten Zone, der Aufheiz- und Pyrolysezone 2, wird über Anschlußstutzen 6 der feine Kohlenstaub mittels der Strahlaufgaben 5 pneumatisch eindosiert. Durch den Stutzen 6 werden weiterhin zurückgekreistes, feuchtes Rohgas oder überhitzter Dampf, die rekuperativ oder in einer hier nicht dargestellten brennkammer auf ein hohes Temperaturniveau gebracht werden, eingespeist. Dieses Gas dient der Fluidisierung und der Umsetzung der primär gebildeten Pyrolyseprodukte der Kohle. Im oberen bereich des Druckbehälters 1 befindet sich der Anschlußstutzen 9 zur Ableitung des Wärmeträgermediums, der mit den Wärmetauscherrohren 10 verbunden ist.

Im mittleren Teil des Druckbehälters 1 ist die Vergasungszone 3 angeordnet. Dieser Bereich enthält unten die Anschlußstutzen 7 für die Zuleitung des überhitzten Wasserdampfes. Der überhitzte Wasserdampf wird dem Wirbelbett in der Vergasungszone 3 über Anströmboden 8 zugeführt. Im Beispiel sind die Wärmetauscherrohre 12 in der Vergasungszone wärmeträgerseitig parallel angeordnet, damit in dem gesamten Bereich Wärmeträgermedium hoher Temperatur vorhanden ist.

Das Wärmeträgermedium hoher Temperatur gelangt über Anschlußstutzen 13 in die Vergasungszone 3, durchläuft dort die Wärmetauscherrohre 12 und wird dann über Anschlußstutzen 27 und über die Verbindungsleitung 11, die im Beispiel außerhalb des Druckbehälters 1 angeordnet ist, aus der Vergasungszone 3 über einen Anschlußstutzen 28 auf tieferem Temperaturniveau in die Pyrolysezone 2 geleitet.

Vergasungs- und Pyrolysezone 3 bzw. 2 sind zur Verbesserung der Verweilzeit (Absenkung des Backmixings) durch ein in die sem Fall im bereich der Zonen 2 und 3 gas- und feststoffundurchlässiges Wehr 14 a getrennt.

Die Vergasungzone 3 ist von der sich anschließenden Kühlzone 4 ebenfalls durch ein gas- und feststoffundurchlässiges Wehr 14 b getrennt. Die Kühlzone 4 wird zwecks Kühlung des Restkokses und gegebenenfalls zur Fluidisierung mit Dampf nahe der Sattdampftemperatur oder vorzugsweise mit trockenem Produktgas über den Anschlußstutzen 16 und den Anströmboden 17 beschickt. Oberhalb der Kühlzone 4 ist der Anschlußstutzen 21 für den Gasaustritt vorgesehen. Dieser steht mit dem Gassammelraum 15 in Verbindung, der sich in Längsrichtung oberhalb der hintereinander liegenden Zonen 2, 3, 4 erstreckt.

Über einen Anschlußstutzen 22 kann feuchtes Rohgas über einen Anströmboden 23 in die Aufheiz- und Pyrolysezone 2 eingeleitet werden. Im Beispiel wird dieses Rückkreisegas über Wärmetauscher 24, 25 vorgewärmt und über ein Gebläse 26 zum Anschlußstutzen 22 transportiert.

Die Ausschleusung des Rückstandes aus der Kühlzone 4 erfolgt über den Anschlußstutzen 18, vorzugsweise über eine hier nicht dargestellte Schleuse gemäß DE-PS 33 39 061.

Vergleichsbeispiele

Im folgenden wird ein Vergleich wesentlicher Daten des neuen Verfahrens zur allothermen Kohlevergasung mit dem bisher bekannten Wasserdampfkohlevergasungsverfahren (s. z.B. DE-PS 24 23 951.8, DE-PS 25 49 784.1, DE-PS 31 12 708.8) durchgeführt. Zur besseren Vergleichbarkeit wird eine thermische Leistung der Wärmequelle von 340 MW zugrundegelegt. Es werden für die Vollvergasung (Tabelle 1) dem Verfahren mit Gasgenerator liegender Bauart nach dem Stand der Technik die Verfahren mit liegendem bzw. stehendem stehendem Gasgenerator gemäß der Erfindung gegenübergestellt. Bei der Teilvergasung (Tabelle 2), zu der sich im besonderen Maße ein stehender Gasgenerator eignet, wird nur der Vergleich zwischen dem Verfahren nach dem Stand der Technik und dem neuen Verfahren mit stehendem Gasgenerator gemäß der Erfindung durchgeführt.

**Tabelle 1**

Vergleich bei Vollvergasung 95% Umsatz)

| | | Verfahren gemäß der Erfindung | | Verfahren Stand der Technik |
| | | Liegender Generator | stehender Generator | Liegender Generator |
|---|---|---|---|---|
| Thermische Leistung der Wärmequelle | MW | 4 x 85 = 340 | 2 x 170 = 340 | 1 x 340 |
| Anzahl der Gasgeneratoren | | 4 | 2 | 1 |
| Abmessungen der Gasgeneratoren | | | | |
| Länge/Höhe | m | .18 | 20 | 33 |
| Durchmesser, außen | m | 5,0 | 7,0 | 7,0 |
| Druck | bar | 21 | 21 | 44 |
| Kohleumsatzgrad | % | 95 | 95 | 95 |
| Kohledurchsatz | t/h | 60,0 | 30,5 | 27,3 |
| Spez. Wasserdampfeinsatz | $\dfrac{t\ H_2O}{t_{Kohle,\ ein}}$ | 2,67 | 2,53 | 6,95 |
| Wasserdampfzersetzungsgrad | % | 49 | 52 | 19 |
| Hochtemperatur-Wärmenutzung* | % | 21,6 | 10,0 | 9,4 |

EP 0 329 673 B1

**Tabelle 2**

Vergleich bei Teilvergasung (50% Umsatz)

| | | Verfahren gem. der Erfindung stehender Gasgenerator | Verfahren nach dem Stand d. Technik liegender Gasgenerator |
|---|---|---|---|
| Thermische Leistung der Energiequelle | MW | 2 x 170 = 340 | 1 x 340 |
| Anzahl der Gasgeneratoren | | 2 | 1 |
| Abmessungen des Gasgenerators | | | |
| Länge/Höhe | m | 20 | 33 |
| Durchmesser, außen | m | 7,0 | 7,0 |
| Druck | bar | 21 | 44 |
| Kohleumsatzgrad | % | 50 | 50 |
| Kohledurchsatz | t/h | 112,0 | 84,6 |
| Spez. Wasserdampfeinsatz | $\dfrac{t\ H_2O}{t\ Kohle,ein}$ | 0,99 | 2,44 |
| Wasserdampfzersetzungsgrad | % | 52,0 | 21,1 |
| Hochtemperatur-Wärmenutzung* | % | 19,6 | 13,7 |

\* Bei der Ermittlung der Hochtemperaturwärmenutzung zur Kohlevergasung wird das $\Delta\vartheta$ des Wärmeträgermediums am Vergaser in Relation zum gesamten $\Delta\vartheta$ des Wärmeträgers gesetzt. So ermittelt sich z.B. das gesamte $\Delta\vartheta$ bei der nuklearen Kohlevergasung aus der Vorlauf- und Rücklauftemperatur des Sekundärheliums.

EP 0 329 673 B1

Aus Tabelle 1 ist ersichtlich, daß beim erfindungsgemäßen Verfahren bei gleicher angebotener thermischer Leistung der Wärmequelle von 340 MW und bei gleichem Kohleumsatzgrad von 95% im Fall des stehenden Gasgenerators bei geringfügig höherem Kohledurchsatz ein deutlich geringerer Wasserdampfeinsatz als beim Verfahren entsprechend dem heutigen Stand der Technik erforderlich ist. Dies resultiert im wesentlichen durch die Erfindungsmerkmale und durch die Absenkung des Druckes. Im Falle des liegenden Gasgenerators kommt neben dem gleichen Vorteil bezüglich des Wasserdampfeinsatzes noch der Vorteil des ungefähr doppelt so hohen Kohledurchsatzes und die deutlich bessere Nutzung der Hochtemperaturwärme zum Tragen.

Analoge Vorteile zeigen sich im Falle, daß nur eine Teilvergasung zur gleichzeitigen Erzeugung von Feinkoks durchgeführt werden soll (Tabelle 2). Gegenüber der Vergasung mit 95% Umsatzgrad ergibt sich für den stehenden Gasgenerator bei einem Umsatzgrad von 50% auch noch der Vorteil des deutlich höheren Kohledurchsatzes, wenn man mit dem Verfahren entsprechend dem heutigen Stand der Technik vergleicht.

| 1 | Druckbehälter |
|---|---|
| 2 | Aufheiz- u. Pyrolysezone |
| 3 | Vergasungszone |
| 4 | Kühlzone |
| 5 | Strahlaufgabe (Kohle- u. Dampfzuführung) |
| 6 | Anschlußstutzen (Kohle- u. Dampfzuführung) |
| 7 | Anschlußstutzen (Dampfzuführung) |
| 8 | Anströmboden |
| 9 | Anschlußstutzen (Wärmeträgergasaustritt) |
| 10 | Wärmetauscherrohre |
| 11 | Verbindungsleitung |
| 12 | Wärmetauscherrohre |
| 13 | Anschlußstutzen (Wärmeträgergaseintritt) |
| 14 | Wehr |
| 14 a | Wehr |
| 14 b | Wehr |
| 15 | Gassammelraum |
| 16 | Anschlußstutzen (Dampfzuführung - Sattdampf) |
| 17 | Anströmboden |
| 18 | Anschlußstutzen (Rückstand) |
| 19 | stehender Gasgenerator |
| 20 | liegender Gasgenerator |
| 21 | Anschlußstutzen (Gasaustritt) |
| 22 | Anschlußstutzen (Dampf- u. Rückkreisegaszuführung) |
| 23 | Anströmboden |
| 24 | Wärmetauscher |
| 25 | Wärmetauscher |
| 26 | Gaspumpe |
| 27 | Anschlußstutzen (Wärmeträgergasaustritt) |
| 28 | Anschlußstutzen (Wärmeträgergaseintritt) |

**Ansprüche**

1. Verfahren zur Kohlevergasung unter Druck mit Wasserdampf als Vergasungs- und Fluidisierungsmittel in einem Gasgenerator mit innen angeordneten Wärmetauscherrohren für das Wärmeträgermedium, wobei das über die Wärmetauscherrohre in den Gasgenerator eintretende heiße Wärmeträgermedium zunächst einer Vergasungszone und anschließend einer Pyrolysezone zugeführt wird und die zu vergasende Kohle ein Wirbelbett bildet und im Gegenstrom zum Wärmeträgermedium durch den Gasgenerator gelangt, wobei der Vergasungsprozeß vollständig allotherm durchgeführt wird und Rohgasrückkreisegas als weiteres Vergasungs- und Fluidisierungsmittel sowie als weiteres Wärmeträgermedium in die Pyrolysezone eingespeist wird, dadurch gekennzeichnet, daß
– die Kohleaufgabe mittels überhitztem Wasserdampf von unten in das Wirbelbett der Pyrolysezone erfolgt und
– die Aschepartikel in einer separaten Kühlzone mittels trockenem Produktgas fluidisiert und gekühlt werden.

2. Verfahren nach Anspruch 1, dadurch gekennzeichnet, daß die Kohleaufgabe mittels Rohgasrückkreisegas erfolgt.

3. Verfahren nach Anspruch 1 oder 2, dadurch gekennzeichnet, daß die Kohleaufgabe mittels einer oder mehrerer Strahlaufgabelanzen erfolgt.

4. Verfahren nach einem oder mehreren der vorhergehenden Ansprüche, dadurch gekennzeichnet, daß die Fluidisierung und Kühlung der Aschepartikel mittels Wasserdampf erfolgt, dessen Temperatur vorzugsweise 20 bis 100°C oberhalb des druckabhängigen Taupunktes liegt.

5. Verfahren nach einem oder mehreren der vorhergehenden Ansprüche, dadurch gekennzeichnet, daß die Ausdosierung der gekühlten Asche aus der Kühlzone über eine Austragsschleuse erfolgt.

6. Verfahren nach einem oder mehreren der vorhergehenden Ansprüche, dadurch gekennzeichnet, daß als Wärmeträgergas Rauchgas von vorzugsweise etwa 950°C dient.

7. Verfahren nach einem oder mehreren der Ansprüche 1 bis 4, dadurch gekennzeichnet, daß als Wärmeträgergas Helium aus dem Sekundärkreislauf mit etwa 900°C oder aus dem Primärkreislauf mit bis zu 950°C eines Hochtemperaturreaktors dient.

8. Wirbelbett-Gasgenerator zur Durchführung des Verfahrens gemäß Anspruch 1 und einem oder mehreren der folgenden Verfahrensansprüche, dadurch gekennzeichnet, daß ein zylindrischer Druckbehälter (1) eines liegend angeordneten Gasgenerators (20) im Bereich der Wirbelschicht in eine Aufheizund Pyrolysezone (2), eine separate Vergasungszone (3) sowie eine separate Kühlzone (4) unterteilt ist, die Aufheizund Pyrolysezone (2) mit als Strahlaufgabe (5) ausgebildeten Kohleeinfüllöffnungen mit einer Rohgasrückkreisegaszuführung bzw. einer Dampfzuführung (6) versehen ist, die Vergasungszone (3) Dampfzuführungen (7) aufweist, die mit Anströmböden (8) verbunden sind, und der Kühlzone (4) eine Dampfzuführung (16) mit Anströmboden (17) und eine Austragsschleuse (18) zugeordnet sind, in der Vergasungszone (3) eine Wärmeträgergaszuführung (13) und Wärmetauscherrohre (12) sowie eine innen oder außen verlegte Verbindungsleitung (11) angeordnet sind und letztere mit einem Wärmetauscherrohr (10) und einer Wärmeträgergasabführung (9) in der Aufheiz- und Pyrolysezone (2) verbunden ist, zwischen Vergasungszone (3) und Aufheiz- und Pyrolysezone (2) im Bereich der Wirbelschicht ein gas- und feststoffundurchlässiges Wehr (14a) und zwischen Vergasungszone (3) und Kühlzone (4) im Bereich der Wirbelschicht ein gas- und feststoffundurchlässiges Wehr (14b) vorgesehen sind und sich oberhalb der Zonen (2, 3, 4) ein gemeinsamer Gassammelraum (15) mit Gasabführung (21) befindet.

9. Wirbelbett-Gasgenerator zur Durchführung des Verfahrens nach Anspruch 7, dadurch gekennzeichnet, daß in der Aufheiz- und Pyrolysezone (2) eine zusätzliche Rohgasrückkreisgaszuführung (22) und ein Anströmboden (23) vorgesehen sind und in die Gasrückführung (22) Wärmetauscher (24, 25) und eine Gaspumpe (26) einbezogen sind.

10. Wirbelbett-Gasgenerator zur Durchführung des Verfahrens nach Anspruch 1 und einem oder mehreren der folgenden Verfahrensansprüche, dadurch gekennzeichnet, daß ein zylindrischer Druckbehälter (1) eines stehend angeordneten Gasgenerators (19) in eine in seinem oberen Bereich befindliche Aufheiz- und Pyrolysezone (2), eine darunter angeordnete, separate Vergasungszone (3) sowie eine darunter angeordnete, separate Kühlzone (4) unterteilt ist, die Aufheiz- und Pyrolysezone (2) mit als Strahlaufgabe (5) ausgebildeten Kohleeinfüllöffnungen mit einer Rohgasrückkreisegaszuführung bzw. einer Dampfzuführung (6) versehen ist, die Vergasungszone (3) eine Dampfzuführung (7) aufweist, die mit einem Anströmboden (8) verbunden ist, und der Kühlzone (4) eine Dampfzuführung (16) mit Anströmboden (17) und eine Austragsschleuse (18) zugeordnet sind, in der Aufheiz- und Pyrolysezone (2) eine Wärmeträgergasabführung

EP 0 329 673 B1

(9) und Wärmetauscherrohre (10) und eine verbindungsleitung (11) angeordnet sind und letztere mit einem Wärmetauscherrohr (12) und einer Wärmeträgergaszuführung (13) in der Vergasungszone (3) verbunden ist, zwischen Vergasungszone (3) und Aufheiz- und Pyrolysezone (2) ein gas- und feststoffdurchlässiges Wehr (14) vorgesehen ist und sich oberhalb der Aufheiz- und Pyrolysezone (2) ein Gassammelraum (15) mit Gasabführung (21) befindet.

## Claims

1. Process for the gasification of coal under pressure, with steam as the gasification- and fluidisation-agent, in a gas generator with heat exchanger pipes arranged in the interior, for the heat carrier medium ; wherein the hot heat carrier medium entering into the gas generator by way of the heat exchanger pipes is conveyed firstly to a gasification zone and subsequently to a pyrolysis zone, and the coal to be gasified forms a fluidised bed and passes through the gas generator in counterflow to the heat carrier medium ; and wherein the gasification process is performed in completely allothermic manner, and crude gas feedback-circuit gas is fed as a further gasification- and fluidisation- agent, and also as a further heat carrier medium, into the pyrolysis zone, characterised in that
   - the coal feed is performed by means of superheated steam, from below, into the fluidised bed of the pyrolysis zone, and
   - the ash particles are fluidised and cooled in a separate cooling zone, by means of dry product gas.

2. Process according to claim 1, characterised in that the coal feed is performed by means of crude gas feedback-circuit gas.

3. Process according to claim 1 or 2, characterised in that the coal feed is performed by means of one or more jet feed lances.

4. Process according to any one or more of the preceding claims, characterised in that the fluidisation and cooling of the ash particles is performed by means of steam, whose temperature preferably lies 20 to 100°C above the pressure-dependent dew point.

5. Process according to any one or more of the preceding claims, characterised in that the dosed discharge of the cooled ash from the cooling zone is performed by way of a discharge gate.

6. Process according to any one or more of the preceding claims, characterised in that flue gas of preferably about 950°C serves as the heat carrier gas.

7. Process according to any one or more of the claims 1 to 4, characterised in that helium from the secondary circuit at about 900°C, or from the primary circuit at up to about 950°C, of a high-temperature reactor, serves as the heat carrier gas.

8. Fluidised-bed gas generator for operating the process according to claim 1 and any one or more of the following process claims, characterised in that a cylindrical pressure vessel (1) of a gas generator (20) in a lying position is subdivided, in the region of the fluidised bed, into a heating- and pyrolysis- zone (2), a separate gasification zone (3), and a separate cooling zone (4) ; the heating- and pyrolysis- zone (2) is provided with coal infeed openings in the form of a jet feed (5) with a crude gas feedback-circuit gas supply means and/or a steam supply means (6) ; the gasification zone (3) has steam supply means (7) which are connected with inflow bases (8), and a steam supply means (16) with inflow bases (17) and a discharge gate (18) are associated with the cooling zone (4) ; in the gasification zone (3) there are arranged a heat carrier gas supply means (13) and heat exchanger pipes (12) and a connecting pipe (11) placed on the inside or on the outside, this latter being connected with a heat exchanger pipe (10) and with a heat carrier gas discharge means (9) in the heating- and pyrolysis- zone (2) ; between the gasification zone (3) and the heating and pyrolysis- zone (2), in the region of the fluidised bed, a dam means (14a) is provided, which is impermeable to gas and to solid material ; and between the gasification zone (3) and the cooling zone (4), in the region of the fluidised bed, dam means (14b) are provided, which are impermeable to gas and to solid material ; and above the zones (2, 3, 4) there is located a common gas collecting chamber (15) with gas discharge means (21).

9. Fluidised-bed gas generator for operating the process according to claim 7, characterised in that in the heating- and pyrolysis- zone (2) there are provided an additional crude gas feedback-circuit gas supply means (22) and an inflow base (23), and heat exchangers (24, 25) and a gas pump (26) are comprised within the gas feedback means (22).

10. Fluidised-bed gas generator for operating the process according to claim 1 and any one or more of the following process claims, characterised in that a cylindrical pressure vessel (1) of a standing gas generator (19) is subdivided into a heating- and pyrolysis- zone (2) located in its upper region, a separate gasification zone (3) arranged thereunder, and a separate cooling zone (4) arranged thereunder ; the hea-

11

ting- and pyrolysis- zone (2) is provided with coal infeed openings in the form of a jet feed (5), with a crude gas feedback-circuit gas supply means and/or a steam supply means (6) ; the gasification zone (3) has a steam supply means (7) which is connected with an inflow base (8), and a steam supply means (16) with inflow bases (17) and a discharge gate (18) are associated with the cooling zone (4) ; in the heating- and pyrolysiszone (2) there are arranged a heat carrier gas discharge means (9) and heat exchanger pipes (10) and a connecting pipe (11), this latter being connected with a heat exchanger pipe (12) and a heat carrier gas supply means (13) in the gasification zone (3) ; between the gasification zone (3) and the heating- and pyrolysiszone (2) there is provided a dam means (14) which is permeable to gas and to solid materials, and above the heating- and pyrolysis- zone (2) there is located a gas collecting chamber (15) with gas discharge means (21).

## Revendications

1. Procédé pour la gazéification de charbon sous pression, avec de la vapeur d'eau comme agent de gazéification et de fluidisation dans un générateur de gaz, avec, disposés à l'intérieur, des tubes d'échange de chaleur pour l'agent caloporteur, où l'agent caloporteur chaud entrant dans le générateur de gaz est amené d'abord à une zone de gazéification et ensuite à une zone de pyrolyse et où le charbon à gazéifier forme un lit fluidisé et parvient en contre-courant à l'agent caloporteur à travers le générateur de gaz, le processus de gazéification étant exécuté de façon complètement allothermique et où le gaz du circuit de retour de gaz brut est amené comme autre agent de gazéification et de fluidisation ainsi que comme autre agent caloporteur dans la zone de pyrolyse, caractérisé en ce que
   – l'apport de charbon au moyen de vapeur d'eau surchauffée a lieu depuis le bas dans le lit fluidisé, et en ce que
   – les particules de cendre sont fluidisées et refroidies dans une zone séparée de refroidissement au moyen de gaz produit sec.

2. Procédé suivant la revendication 1, caractérisé en ce que l'apport de charbon se fait au moyen de gaz du circuit de retour de gaz brut.

3. Procédé suivant la revendication 1 ou 2, caractérisé en ce que l'apport de charbon se fait au moyen d'une ou de plusieurs lances d'apport sous forme de jets.

4. Procédé suivant une ou plusieurs des revendications précédentes, caractérisé en ce que la fluidisation et le refroidissement des particules de cendre ont lieu avec de la vapeur d'eau dont la température est de préférence supérieure de 20 à 100°C au point de rosée dépendant de la pression.

5. Procédé suivant une ou plusieurs des revendications précédentes, caractérisé en ce que la prise de dose de la cendre refroidie à partir de la zone de refroidissement a lieu par l'intermé diaire d'une écluse de décharge.

6. Procédé suivant une ou plusieurs des revendications précédentes, caractérisé en ce que, comme gaz caloporteur, on utilise du gaz de fumée, de préférence à 950°C.

7. Procédé suivant une ou plusieurs des revendications 1 à 4, caractérisé en ce que, comme gaz caloporteur, on utilise de l'hélium provenant du circuit secondaire, à environ 900°C, ou du circuit primaire, jusqu'à 950°C, d'un réacteur à haute température.

8. Générateur de gaz à lit fluidisé pour la mise en oeuvre du procédé suivant la revendication 1 et une ou plusieurs des revendications suivantes, caractérisé en ce qu'un récipient cylindrique sous pression (1) d'un générateur de gaz (20) disposé couché, est divisé, dans la région de la couche fluidisée, en une zone (2) de chauffage et de pyrolyse, en une zone (2) séparée de gazéification ainsi qu'en une zone (4) séparée de refroidissement, en ce que la zone (2) de chauffage et de pyrolyse est pourvue d'ouvertures (5) de remplissage de charbon, avec apport par jets, avec une amenée de gaz du circuit de retour de gaz brut, respectivement avec des amenées de vapeur (6), en ce que la zone (2) de gazéification comporte des amenées de vapeur (7) qui sont reliées à des fonds (8) d'amenée de courant, et en ce que, à la zone (4) de refroidissement sont associées une amenée de vapeur (16) avec des fonds (17) d'amenée du courant, et une écluse de décharge (18), en ce que, dans la zone (3) de gazéification sont disposés une amenée (13) de gaz caloporteur et des tubes (12) d'échange de chaleur, ainsi qu'un conduit de liaison (11) placé à l'intérieur ou à l'extérieur et ce dernier étant relié à un tube (10) d'échange de chaleur et à un départ (9) de gaz caloporteur dans la zone (2) de chauffage et de pyrolyse, en ce qu'entre la zone (3) de gazéification et la zone (2) de chauffage et de pyrolyse, dans la région du lit fluidisé, on a prévu un barrage (14a) imperméable au gaz et aux matières solides et en ce qu'entre la zone (3) de gazéification et la zone (4) de refroidissement, dans la région de la couche fluidisée, on a prévu un barrage (14b) imperméable au gaz et aux matières solides, et en ce qu'au-dessus des zones (2, 3, 4) se trouve un espace (15) collecteur de gaz, commun, avec un départ de gaz (21).

9. Générateur de gaz à lit fluidisé pour la mise en oeuvre du procédé suivant la revendication 7, caractérisé en ce que, dans la zone (2) de chauffage et de pyrolyse, sont incorporés une amenée (22) supplémentaire de gaz du circuit de retour de gaz brut et un fond (23) d'amenée de courant, et en ce que, dans l'amenée (22) de gaz de retour sont incorporés un échangeur de chaleur (24, 25) et une pompe à gaz (26).

10. Générateur de gaz à lit fluidisé pour la mise en oeuvre du procédé suivant la revendication 1 et une ou plusieurs des revendications de procédé subséquentes, caractérisé en ce qu'un récipient cylindrique sous pression (1) d'un générateur de gaz (19) disposé dressé, est divisé en une zone (2) de chauffage et de pyrolyse se trouvant dans sa région supérieure, en une zone (3) séparée de gazéification disposée en dessous ainsi qu'en une zone (4) séparée de refroidissement, disposée en dessous, en ce que la zone (2) de chauffage et de pyrolyse est pourvue d'ouvertures (5) de remplissage de charbon, avec apport par jets, avec une amenée de gaz du circuit de retour de gaz brut, respectivement avec une amenée de vapeur (6), en ce que la zone (3) de gazéification comporte une amenée de vapeur (7) qui est reliée à un fond (8) d'amenée de courant et en ce qu'à la zone (4) de refroidissement sont associées une amenée de vapeur (16) avec des fonds (17) d' amenée de courant et une écluse de décharge (18), en ce que, dans la zone (2) de chauffage et de pyrolyse sont disposés un départ (9) de gaz caloporteur et des tubes (10) d'échange de chaleur et un conduit de liaison (11), et en ce que ce dernier est relié à un tube (12) d'échange de chaleur et à une amenée (13) de gaz caloporteur dans la zone (3) de gazéification, en ce que, entre la zone (3) de gazéification et la zone (2) de chauffage et de pyrolyse, on a prévu un barrage (14) imperméable au gaz et aux matières solides, et en ce que, audessus de la zone (2) de chauffage et de pyrolyse se trouve un espace (15)collecteur de gaz, avec un départ de gaz (21).

# FIG. 1

**FIG. 2**